# EUROPÄISCHE PATENTSCHRIFT

(11) **EP 1 266 168 B1**
(45) Veröffentlichungstag und Bekanntmachung des Hinweises auf die Patenterteilung: **16.03.2005**
(21) Anmeldenummer: 01915055.6
(22) Anmeldetag: 28.02.2001
(51) Int. Cl.: F16L 59/02

(54) **PLATTENMATERIAL FÜR DIE THERMISCHE ROHRISOLIERUNG**
SHEET MATERIAL FOR THERMAL INSULATION FOR PIPES
MATIERE PLASTIQUE STRATIFIEE EN FEUILLE DESTINEE A L'ISOLATION THERMIQUE DE TUYAUX

(30) Priorität: 29.02.2000 DE 10009302
(43) Veröffentlichungstag der Anmeldung: 18.12.2002
(73) Patentinhaber: Kaimann, Georg Josef, 33161 Hövelhof (DE)
(72) Erfinder: Kaimann, Georg Josef, 33161 Hövelhof (DE)
(74) Vertreter: Grimm, Ekkehard
(86) Internationale Anmeldenummer: PCT/DE2001/000751
(87) Internationale Veröffentlichungsnummer: WO 2001/065166

(56) Entgegenhaltungen:
- EP-A- 0 087 613
- CH-A- 410 560
- DE-A- 3 431 477
- DE-U- 8 427 762

## Beschreibung

### Technisches Gebiet und Stand der Technik

Die Erfindung befaßt sich mit der thermischen Isolierung von Rohren von Kälte- und Klimaanlagen und betrifft im wesentlichen die Isolierung von bereits installierten Rohren mittels eines flexiblen Dämmstoffes als Plattenmaterial.

Ein geeigneter Dämmstoff ist ein Elastomerschaum auf der Basis von synthetischem Kautschuk, insbesondere ein Vinyl-Kautschuk, mit Geschlossenzelligkeit des Materials. Derartige Materialien können bei entsprechend hochqualitativer Herstellung sehr niedrige Wärmeleitfähigkeitswerte von λ₀° ≤ 0,036 W/(m^{·}K) aufweisen. Darüber hinaus besitzen sie hervorragende Sperreigenschaften gegen Wasserdampfdiffussion; Diffussionswiderstandszahlen von µ ≥ 7.000 garantieren einen hohen Korrosionsschutz gegen äußere Einflüsse. Der Temperatur-Einsatzbereich für den Dämmstoff liegt im Bereich von - 40 °C bis + 105 °C Oberflächentemperatur der zu isolierenden Rohrleitung.

Zur thermischen Isolierung von Rohren eines äußeren Durchmessers bis 76 mm verwendet man regelmäßig aus dem Dämmstoff gefertigte Schläuche. Bei Rohren eines äußeren Durchmessers ab 76 mm geht man zur Isolierung zunehmend von Plattenmaterial aus. Ab Rohrdurchmessern über 160 mm stehen Schläuche im allgemeinen nicht mehr zur Verfügung.

Bei Schläuchen ist deren Innendurchmesser gleich dem Außendurchmesser des zu isolierenden Rohres; die Dämmschichtdicke des Schlauches richtet sich nach der Temperaturdifferenz zwischen Rohrwandtemperatur und Umgebungstemperatur. So sind Schläuche üblich von 6 mm Innendurchmesser und 6 mm Dämmschichtdicke bis 160 mm Innendurchmesser und 45 mm Dicke der Dämmschicht; in der Praxis entspricht das etwa 140 verschiedenen Schlauchausführungen.

Bei der Isolierung vor der Rohrinstallation wird der Schlauch über das Rohrende geschoben und dann über das Rohr weiter geschoben. Demgegenüber verlangt die Isolierung von Rohren, die bereits installiert sind und kein freiliegendes Ende mehr aufweisen, ein Aufschlitzen des Schlauches der Länge nach. Der geschlitzte Schlauch wird auseinandergeklappt, um das Rohr herum gebracht und an seinen Schnittflächen miteinander zu einer Naht verklebt. Eine Verklebung erfolgt auch beim Aneinandersetzen von Schläuchen, indem man den Stoß des bereits fixierten Schlauches mit dem Stoß des anschließenden Schlauches zusammenklebt.

Das Verkleben der Längsnaht mittels eines streichfähigen Klebers (Naßverklebung) erfordert Zeit zum Auftragen und vor allem zum Ablüften des lösungsmittelhaltigen Klebers, vorzugsweise eines toluolfreien Polychloroprenklebers. Wegen des frei werdenden Lösungsmittels ist gelegentlich mit Atemschutzmaske zu arbeiten.

Zur Abhilfe hat man selbstklebende Isolierschläuche entwickelt; sie sind industriell vorgeschlitzt und weisen an wenigstens einer der Schnittflächen, vorzugsweise an beiden Schnittflächen einen Selbstklebestreifen auf, welcher von einer Schutzfolie abgedeckt ist. Derartige selbstklebende Isolierschläuche bedingen eine einfachere und schnellere Handhabung und führen zu wesentlich kürzeren Montagezeiten als bei der Methode des Längsschlitzens vor Ort und dann Naßverklebens.

Bei selbstklebenden Schläuchen hat gelegentlich die Festigkeit der Selbstklebenaht zur Beanstandungen geführt. Eine Schwächung der Klebenaht tritt auch dann auf, wenn die zu verklebenden Flächen nicht paßgerecht zueinander sitzen. Denn es ist schwierig, paßgenau zu arbeiten, da sich zwei Selbstklebeflächen, wenn sie sich einmal berührt haben, nicht mehr voneinander trennen lassen, ohne sich von dem Material, auf dem sie aufgebracht sind, abzulösen.

Zur Abhilfe hat man daher die Klebefläche vergrößert, indem man im Zuge der technischen Entwicklung zunächst den Schnitt durch das Dämmmaterial des Isolierschlauches nicht senkrecht geführt hat (wie in Fig. 1 gezeigt), sondern schräg (siehe Fig. 2); eine wesentlich stärkere Vergrößerung der Klebefläche erzielte man dann durch eine sogenannte T-Verklebung (siehe Fig. 3).

Ferner wurde gemäß der DE 198 10 244 A1, die ein Formteil für die Isolierung von Rohrleitungen betrifft, vorgeschlagen, den Schnitt durch einen Isolierschlauch so auszuführen, daß er tangential am Innendurchmesser des Schlauches anliegt (siehe Fig. 9). Offensichtlich aber hat der Vorschlag, einen Isolierschlauch tangential aufzuschneiden, in die Praxis keinen Eingang gefunden; der Grund mag in der Schwierigkeit liegen, den elastischen, weichen Materialschlauch unter Ausbildung eines einwandfreien Tangentialschnittes sauber aufzuschlitzen.

Angemerkt sei, daß Isolierschläuche; welche nicht vorgeschlitzt sind, als Meterware mit üblichen Längen von 2 m (bei einem Innendurchmesser von 6 mm und einer Dämmschichtdicke von 45 mm) bis 400 m (Innendurchmesser 6 mm, Dämmschichtdicke 6 mm) in den Handel gelangen. Demgegenüber werden selbstklebende Schläuche als Meterware üblicherweise nur bis zu einem Innendurchmesser von 89 mm angeboten, und zwar bei Dämmschichtdicken zwischen 11,5 mm und 24,5 mm, entsprechend Schlauchlängen von 30 m bis 12 m.

Das konventionelle Plattenmaterial - mit rechteckigem Querschnitt - kommt entweder von der Endlosrolle abgeschnitten in den Handel und weist dabei vorzugsweise eine Breite von 1 m und von der Materialstärke abhängige Längen von 30 m bis 3 m auf, wobei die Materialstärke oder Dämmschichtdicke von 3 mm bis 50 mm geht, oder wird als Platten von üblicherweise 2,0 m Länge und 0,5 m Breite geliefert.

Es sind selbstklebende Platten bekannt. Diese weisen zum Aufkleben an der zu isolierenden ebenen bis gebogen Oberfläche keine Klebestreifen auf; vielmehr ist die gesamte Unterseite selbstklebend

Wie eingangs erwähnt, werden Rohrleitungsisolierungen bei Rohrdurchmessern ab 76 mm eher mittels Plattenware vorgenommen. Bedingt ist dies dadurch, daß für große Rohrdurchmesser Schläuche zu teuer werden, da mit zunehmendem inneren Schlauchdurchmesser und zunehmender Dicke der Dämmschicht (zunehmender äußerer Schlauchdurchmesser) das Leervolumen in den Versandkartons drastisch zunimmt, also je Mengeneinheit des Dämmmaterials die Transportwege und die Verpackungsmaterialien und damit die Transportkosten und die Umweltbelastungen überproportional ansteigen.

Demgegenüber ist der Bezug von dicht gepackter Plattenware wesentlich ökonomischer. Außerdem ist Plattenware ohnehin billiger herzustellen als Schlauchware. Die Herstellung von Rohrisolierungen aus Plattenware ist generell jedoch weniger komfortabel und akkurat zu erledigen als das Arbeiten mit vorgefertigter Schlauchware. Davon sind sämtliche Rohrleitungen, sowohl die noch nicht installierten als auch die bereits installierten, betroffen.

Beim praktizierten konventionellen Verarbeiten von Plattenware zur Rohrisolierung muß die Ware zunächst auf eine Breite geschnitten werden, welche genau dem Außenumfang des zu isolierenden Rohres entspricht. Dann bestreicht man die beiden Längsseiten, von denen wenigstens eine durch das Zuschneiden entstanden ist, mit dem Kleber und läßt sie ablüften. Darauf legt man die Platte um das Rohr herum und klebt die gegeneinanderstoßenden Längsseiten aneinander. Hierbei empfiehlt es sich zur Vermeidung von Verwerfungen und Versetzungen, von den beiden Plattenenden her, das heißt von den Enden des entstehenden Schlauches her, zur Schlauchmitte hin zu arbeiten.

Ein gewisses, bei der Verarbeitung von Plattenware auftretendes Problem besteht darin, daß beim Biegen der Platte um das Rohr herum die Plattenoberseite auf eine größere Länge gedehnt wird. Während nämlich der Innenumfang der gebildeten, im Querschnitt ringförmigen Isolierung der ursprünglichen Plattenbreite entspricht, hat der Außenumfang der Isolierung entsprechend der Dikke D der Dämmschicht (Plattenstärke) ungefähr um den Betrag 2D x n zugenommen. Dadurch entsteht in dem Isoliermantel ein durch die Biegung verursachter Spannungszustand, welcher dazu führt, daß sich die Seitenflächen der zur Form des Schlauches gebogenen Platte nicht senkrecht (radial) und parallel berühren wollen, sondern einen nach oben offenen V-förmigen Luftkeil zwischen sich ausbilden, der beim Verkleben unter Zwang beseitigt werden muß.

Verwendet man vorgefertigte, standardisierte Platten von üblicherweise 2 m Länge, erfordert die Montage regelmäßig zwei Arbeitskräfte. Mehrere aufeinanderfolgende so gefertigte Abschnitte von schlauchförmigen Isoliermänteln werden an ihren vorderen und hinteren Enden oder Stößen genau so miteinander verbunden wie die vorgefertigten Schläuche, indem man die einander zugewandten ringförmigen Endflächen oder Stöße mit Klebstoff bestreicht, die Stöße ablüften läßt und dann zum Verkleben gegeneinander drückt.

Das Zuschneiden der Plattenware auf den Umfang des Leitungsrohres muß akkurat erfolgen, ebenfalls das Verkleben der Plattenlängsseiten miteinander. Läßt man die gebotene Sorgfalt außer Acht, zeigt die verkleidete Rohrleitung entlang ihres Verlaufes eine Wellenform und Versetzungen, welche Lufteinschlüsse zwischen Rohrwand und Dämmmaterial verursachen können. Derartige Unregelmäßigkeiten führen zu einer reduzierten Isolierwirkung. Unregelmäßigkeiten der Naht treten auch dadurch auf, wenn der Naßkleber noch nicht ausreichend abgelüftet hat, so daß die Klebeflächen noch gegeneinander verschieblich sind und Versetzungen ausbilden.

Schließlich ist nach der DE 34 31 477 A1 aus dem Jahre 1986, welche eine rohrförmige Isolierschale zur thermischen Isolation an Rohrleitungen von Wärme- oder Kälteanlagen betrifft, ein plattenartiges Isoliermaterial bekannt, welches nach dem Herumbiegen um das Rohr weniger als das im Querschnitt rechteckige Material dazu neigt, einen nach oben offenen V-förmigen Luftkeil (Radialfuge) zwischen sich auszubilden, der beim Verkleben unter Zwang beseitigt werden muß. Demzufolge bildet dieses Plattenmaterial auch geringere, durch das Biegen des Materials verursachte Spannungszustände aus. Nach der Aufgabe gemäß der DE 34 31 477 A1 soll in der Radialfuge die Ausbildung keil- oder linsenförmiger Lufträume, welche Wärme- bzw. Kältebrücken bilden, vermieden werden. Nach dem generellen Lösungskonzept der genannten Druckschrift soll die Fuge oder Klebenaht mit Bezug auf ihren Verlauf mindestens abschnittweise von der Radialrichtung wesentlich abweichen. Dazu werden ganz bevorzugter Weise vorgefertigte Isolierschläuche mit eigenartigen, schräg liegenden Längsschnitten versehen. Nach einem abgewandelten Konzept wird die Rohrisolierung nicht von einem Isoliermaterial in Schlauchform ausgehend, sondern von einem Isoliermaterial in Plattenform ausgehend erzeugt. Außer einem Plattenmaterial, das an den Rändern treppenstufenartig geformt ist, wird auch eine Platte mit keilförmigen Ansätzen vorgeschlagen; dabei handelt es sich um eine Platte mit rechteckigem Querschnitt, an deren beiden Längsrändern keilförmige, im Querschnitt dreieckige Streifen als Ansätze angeklebt sind. Der von den Schrägen der Ansätze ausgebildete Winkel zur Horizontalen offenbart sich aus der Druckschrift zu etwa 140°. Zum Verbinden der aneinander stoßenden Schrägen des um das zu isolierende Rohr herumgelegten Plattenmaterials dienen Selbstklebestreifen an wenigstens einer der Schrägen.

Dieses Plattenmaterial gemäß der DE 34 31 477 A1 hat ebenfalls keinen Eingang in die Praxis gefunden. Sein offensichtlicher Nachteil liegt in der Herstellungsmethode, bei der je ein langer, im Querschnitt dreieckiger Materialstreifen mit den beiden Längsrändern eines langgestreckten Materialstreifens von rechteckigem Querschnitt zu verkleben ist. Der dreieckige Querschnitt des anzuklebenden Materialstreifens weist die Winkel 90°, ungefähr 40° und ungefähr 50° auf. Mit den schmalen Längsrändern des rechtekkigen Materialstreifens zu verkleben ist die Fläche, welche die kürzere Kathete des dreieckigen Materialstreifens bildet, also die schmalste Fläche des dreieckigen Materialstreifens. Durch diese Herstellungsparameter bedingt, dürfte sich in brauchbarer Weise kein brauchbares Plattenmaterial mit einem parallelogrammförmigen Querschnitt herstellen lassen, dessen Schräge zur Horizontalen Winkel von über etwa 140° ausbildet.

Das montierte Plattenmaterial gemäß der DE 34 31 477 A1 weist eine vom Innen- zum Außenradius des Isoliermantels bogenförmig verlaufende Klebenaht auf, deren Erstreckung beträchtlich kleiner ist, als bei einem Isoliermantel, welcher aus einem Isolierschlauch durch einen Tangentialschnitt im Sinne der vorliegenden Fig. 9 entstanden ist.

### Aufgabe der Erfindung

Gegenüber dem zu den Isolierschläuchen und zu den Isolierplatten geschilderten Stand der Technik der Materialvorbereitung und - verklebung liegt die Aufgabe der Erfindung darin, eine Plattenware zur Rohrisolierung zur Verfügung zu stellen, welche die Vorteile der bekannten Schläuche und Platten kombiniert und gewisse Nachteile des Standes der Technik ausschaltet oder minimiert. Die zu übernehmenden Vorteile sind die Verfügbarkeit von Plattenmaterial mit einer an die Normumfänge von Rohrleitungen angepaßten Breite und die Ausrüstung des Plattenmaterials mit Selbstklebeflächen; Nachteile, die vermieden werden sollen, sind insbesondere Schwierigkeiten, vorbereitete Klebezonen mit ihrer vorgesehenen Gegenfläche paßgenau in Deckung zu bringen. Außerdem wird besonders angestrebt, bei der Verklebung der Längsränder der Platte (zur rohrachsparallelen Längsnaht der Isolierung) die Klebefläche auf ein Ausmaß zu bringen, wie es ungefähr bei dem zu Fig. 9 beschriebenen Tangentialschnitt eines Isolierschlauches auftritt.

Ausgehend von einem Plattentyp entsprechend der oben erörterten DE 34 31 477 A1 (Plattenmaterial mit parallelogrammförmigem Querschnitt) wird die Aufgabe durch ein Plattenmaterial mit den Merkmalen des Patenanspruchs 1 gelöst, wobei sich in den abhängigen Ansprüchen 2 bis 5 Weiterbildungen der Erfindung angegeben finden.

Die Erfindung wird zum unmittelbaren Verständnis nachfolgend sogleich rein beispielhaft und anhand von schematischen Figuren im allgemeinen und näher erläutert.

### Kurze Beschreibung der Zeichnungen und zugehörige Erläuterungen zum Stand der Technik

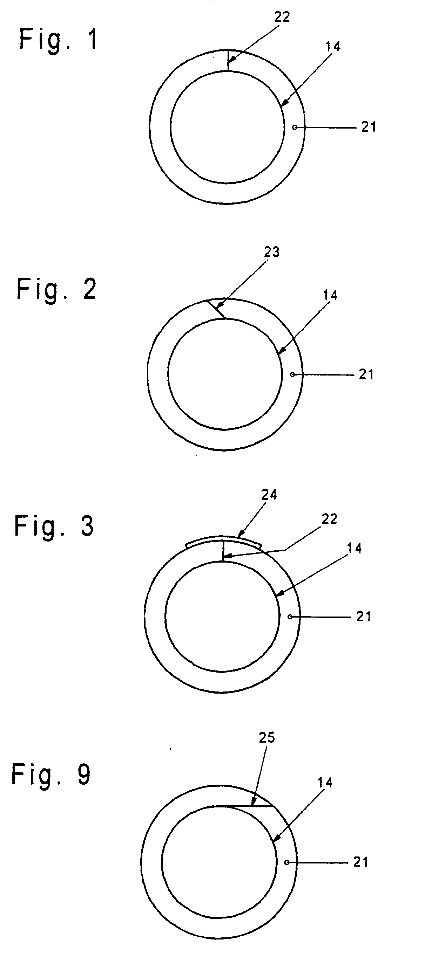

Es zeigen
- Fig. 1: bis Fig. 3 und Fig. 9 je einen Querschnitt durch eine mit einem konventionellen selbstklebenden Isolierschlauch ummantelte Rohrleitung bei jeweils unterschiedlicher Schnittführung beim Schlitzen des Schlauches;

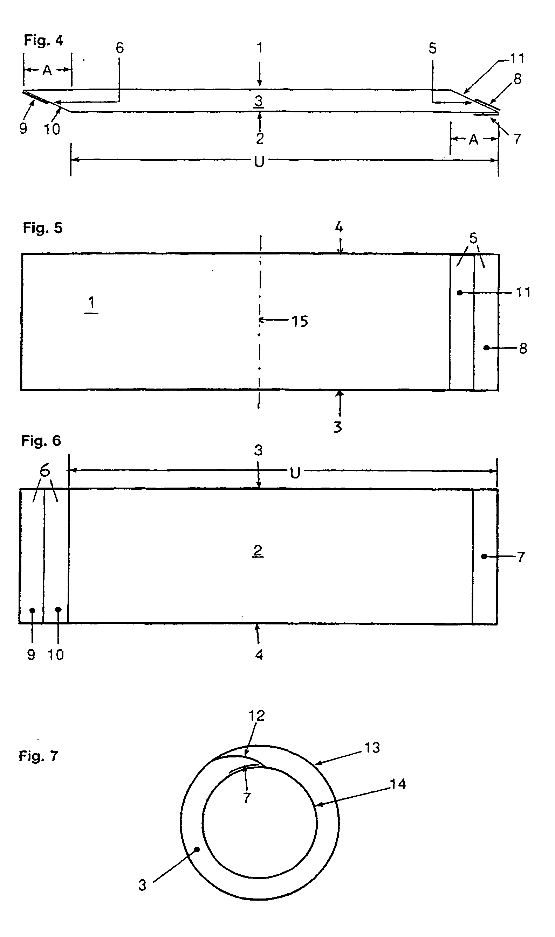

- Fig. 4: eine Isolierplatte gemäß der Erfindung mit selbstklebenden Längsrändern der Platte in der Frontansicht,
- Fig. 5: die Oberseite der Platte nach Fig. 4,
- Fig. 6: die Unterseite der Platte nach Fig. 4 und 5,
- Fig. 7: einen Querschnitt durch eine mit einer Isolierplatte gemäß den Fig. 4 bis 6 isolierte Rohrleitung und

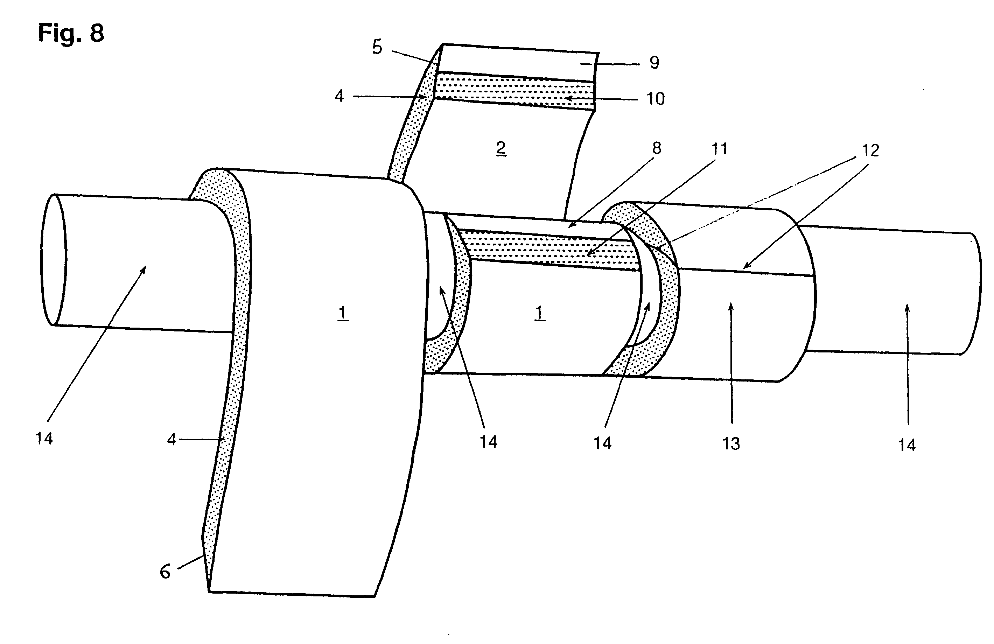

- Fig. 8: in perspektivischer Darstellung verschiedene Fertigungsstadien der Herstellung einer Rohrisolierung mit einer Isolierplatte gemäß den Fig. 4 bis 6.

Nach dem Stand der Technik (Fig. 1 - 3, Fig. 9) sind vorgeschlitzte und an den Schnittflächen mit einem Selbstklebestreifen ausgerüstete Isolierschläuche bekannt. Ist der Schlitz senkrecht geführt (Fig. 1), entspricht die Klebefläche der ordentlichen Längsschnittsfläche der Schlauchwand und die Breite der Klebenaht 22 ist gleich der Stärke der Schlauchwand (Dämmstärke). Ist zur Erhöhung der Klebefläche der Schnitt durch die Schlauchwand schräg angelegt (Fig. 2), erhöht sich die Breite der Klebefläche und damit die Flächenausdehnung der Klebenaht 23. Eine weitere Vergrößerung der Klebefläche erzielt man durch einen wie weiter oben schon näher beschriebenen und in Fig. 9 gezeigten Tangentialschnitt für das Aufschlitzen eines Isolierschlauches. Eine gegebenenfalls noch weitere Vergrößerung der relativen Verklebungsfläche und eine sichere Klebeverbindung stellt die sogenannte T-Verklebung dar. Geht man von der Darstellung nach Fig. 3 aus, ist der selbstklebende Isolierschlauch wie folgt ausgeführt: Beide Schnittflächen eines senkrechten Schlitzes 22 tragen einen Selbstklebestreifen (abgedeckt mit einer abziehbaren Schutzfolie) entsprechend der Schlauchausführung nach Fig. 1; ein selbstklebendes Klebeband 24 ist zur Hälfte bereits mit der Schlauchoberfläche verklebt, die andere Hälfte überragt die Schnittkante (zum Beispiel der rechte Teil des dargestellten "T-Querbalkens") und ist mit einer Schutzfolie gesichert.

Wie bereits ausgeführt, verwenden viele Isolierer ab Rohrdurchmessern von 76 mm alternativ zu Isolierschläuchen ein Plattenmaterial für die Rohrisolierung, wobei das benötigte Dämmmaterial entsprechend dem Umfang der zu isolierenden Rohrleitung exakt zugeschnitten werden muß und die herzustellende Längsnaht mit einem Naßkleber erzeugt wird. Neben dem Zeitaufwand für das Zuschneiden des Isolierstückes und für das Auftragen und das Belüften des Naßklebers bedeutet der Anfall von Schnittverlusten beim Ausschneiden des Isolierstückes aus der Bahn des Plattenmaterials einen weiteren Nachteil.

Zwar ist ein bereits anwendungsfertiges und auf die gewünschte Breite zugeschnittenes Plattenmaterial, welches obendrein mit Selbst klebestreifen zur Fixierung der zu fertigenden Schlauchform ausgerüstet ist, im Stand der Technik nach der DE 34 31 477 A1 grundsätzlich bekannt. Doch hat insbesondere seine weiter oben beschriebene Herstellung aus drei Materialbahnen den Fachmann fast eineinhalb Jahrzehnte lang nicht dazu angeregt, für die Isolierung von Rohren mit einem Plattenmaterial die praktisch bisher nur verwendete Plattenform mit rechteckigem Querschnitt zu verlassen und einen parallelogrammförmigen Querschnitt zu wählen, bei dem die Schräge gegenüber der Horizontalen Winkel von weit über 140° aufweist. - Demgegenüber nutzt die Erfindung das Prinzip des parallelogrammförmigen Querschnitts bei Winkeln der Schräge gegenüber der Horizontalen von weit oberhalb von 140°.

### Wege zur Ausführung der Erfindung

Wie in Fig. 4 illustriert, ist das Plattenmaterial in einem Stück gefertigt und weist im Querschnitt senkrecht zu seiner Längsachse 15 die Form eines Parallelogramms auf. Die beiden horizontalen Strecken des Parallelogramms haben die Länge des Umfanges U der zu isolierenden Rohrleitung 14 und entsprechen der Breite der planparallelen Ebenen der Oberseite 1 und der Unterseite 2 des einstückigen Plattenmaterials. Die Schrägen 5 und 6 des Parallelogramms sind technisch vorteilhaft durch Schrägschnitt eines bandartigen Plattenmaterials zu erhalten. Die Schrägen könnten aber auch sogleich bei der Erzeugung des bandartigen Materials miterzeugt werden. Die Projektion der Schräge 5 und der Schräge 6 auf die Horizontale entspricht jeweils einer Strecke A. Um eine solche Strecke A ist das Plattenmaterial insgesamt breiter als der auf die Ebene abgerollte Umfang U des zu isolierenden Rohres.

Jede Schräge 5, 6 weist einen längsverlaufenden Selbstklebestreifen 8 bzw. 9 (mit nicht gezeigter Schutzfolie) auf, mittels welcher sich die bei der Isolierung deckend überlappenden Schrägen 5 und 6 miteinander unter Ausbildung einer Klebenaht 12 verbinden. Zur Veranschaulichung mögen die Fig. 4 und 7 dienen: Biegt man das Plattenmaterial gemäß Fig. 4 bei feststehendem rechten Ende am linken Ende auf einer Kreisbahn nach unten, entsteht die kreisringförmige Isolierung mit Klebenaht 12 nach Fig. 7.

Die Selbstklebestreifen 8 und 9 könnten sich über die gesamte Breite der Schrägen 5 und 6 erstrecken. Aus Gründen, die sich weiter unten erhellen, nehmen die Selbstklebestreifen 8, 9 vorzugsweise jedoch gerade die halbe Breite der Schrägen 5 und 6 ein und sind randständig angeordnet, so daß innenliegende Streifen 10 und 11 an schräg geschnittenem Plattenmaterial offen liegen (wie in den Fig. 5 und 6 gezeigt).

Nach einer weiteren und sehr vorteilhaften Ausbildung der Erfindung enthält das Plattenmaterial einen zusätzlichen Selbstklebestreifen 7 (mit nicht gezeigter Schutzfolie), und zwar entlang des Längsrandes des ebenen (nicht schräg geschnittenen) Teils seiner Unterseite 2. Dieser Klebestreifen 7 dient nicht zur Verbindung zweier gegeneinandergebogener Ränder des Plattenmaterials, sondern zur Fixierung der Unterseite 2 des Plattenmaterials an dem zu isolierenden Rohr 14 zwecks Erleichterung der Montage.

Analog den selbstklebenden Isolierschläuchen tritt das selbstklebende Plattenmaterial gemäß der Erfindung als lange Meterware oder in Form von kurzen Platten (von beispielsweise 1 m als Standardlänge) auf. Dementsprechend symbolisieren die Fig. 5 und 6 in der Längserstreckung sowohl kurze Isolierstreifen als auch viele Meter lange Vorräte an einem selbstklebenden Plattenmaterial gemäß der Erfindung.

Ferner analog den selbstklebenden Isolierschläuchen weist das erfindungsgemäße Plattenmaterial je Breite U unterschiedliche Dämmschichtdicken auf.

Nachfolgend wird die Montage eines selbstklebenden Plattenmaterials gemäß der Erfindung zu einer Ausführungsform mit Klebestreifen 8 und 9, welche gerade die Hälfte der Breite der Schrägen 5 und 6 einnehmen, beschrieben, wobei Fig. 8 die gedankliche Vorstellung unterstützt.

Zunächst wird dasjenige Ende des Plattenmaterials, das den ebenen (nicht schräg geschnittenen) Längsrand an der Unterseite 2 aufweist an dem Rohrumfang parallel zur Rohrachse angelegt. Weist dabei der angelegte Teil einen Klebestreifen 7 auf, von dem zuvor die Schutzfolie abgezogen worden ist, lassen sich Sitz und Halt der Platte am Rohr 14 fixieren. Das Plattenmaterial wird sodann um das Rohr 14 herumgebogen, bis die herankommende Schräge 6 über die stationäre Schräge 5 gelangt ist. Nun führt man das nicht klebende Feld 10 mit seiner inneren Begrenzung gegen die äußere Begrenzung des Klebefelds 8 und drückt die Flächen 8 und 10 durch senkrechte Druckanwendung zusammen. Entsprechend verfährt man mit dem Klebefeld 9, dessen innere Begrenzung man gegen die äußere Begrenzung des nicht klebenden Feldes 11 führt und dann die beiden Flächen senkrecht gegeneinander drückt. Das akkurate, paßgenaue Übereinanderbringen der Felder oder Streifen 8 und 10 und 9 und 11 läßt sich unschwer bewerkstelligen, wenn man von einem Ende zum anderen Ende des Isolierstückes vorgeht, beispielsweise mit Bezug auf Fig. 8 von links nach rechts. Messen die zur Isolierung verwendeten Platten in ihrer Längserstreckung beispielsweise 1 m, läßt sich die Rohrisolierung von einer Person sauber ausführen; eine zweite Kraft, wie häufig bei der Isolierung mit konventionellem Plattenmaterial, erübrigt sich. Wie die vorstehende Erläuterung des Montagevorgangs zeigt, besteht ein besonderer Handhabungsvorteil bei dem erfindungsgemäßen Plattenmaterial darin, daß sich die Verklebung der Längsränder der Platten durch eine Übereinanderlegen von Überlappungsteilen und deren senkrechtes Zusammendrücken präzise bewerkstelligen läßt.

Ein weiterer Vorteil des erfindungsgemäßen Plattenmaterials liegt in der Möglichkeit, besonders breite Verklebungszonen auszubilden und in der Ummantelung vergleichsweise geringere Materialspannungen im Verklebungsbereich auftreten zu lassen.

Wie insbesondere aus Fig. 4 zu erkennen, können die Schrägen 5 und 6 bezüglich der Ebene (horizontale Oberfläche 1 bzw. 2), von der ab sie geschnitten sind, grundsätzlich jeden Neigungswinkel (zur Horizontalen) zwischen < 180° und > 90° einnehmen. Praktisch sinnvoll werden jedoch nur Winkel im Bereich von etwa 170° bis etwa 150° sein. Bei den Fig. 4 und 8 ist ein Winkel von etwa 155° zugrunde gelegt. Als optimal dürften Winkel um 165° gelten. Entsprechend dem Neigungswinkel der schrägen Flächen 5 und 6 bemißt sich deren Oberfläche und damit die auftretende Klebefläche, indem sich mit zunehmendem Wert des Neigungswinkels (geringer werdende Steigung) der Schräge deren Fläche vergrößert und umgekehrt. Bei einem Neigungswinkel der Schrägen von 165° resultiert eine Oberfläche der Schrägen 5 und 6 von etwa dem 3,5-fachen der Fläche bei senkrechtem Schnitt (90°-Schnitt) gemäß dem praktizierten Stand der Technik.

Hinsichtlich der Geometrie der Klebenähte 12 ist theoretisch zu erwarten, daß sie in der gebildeten Schlauchwand 13 eine schräg liegende Ebene ausbilden. Wie allerdings die Praxis ergibt, bildet (gemäß den Fig. 7 und 8) die Klebenaht 12 eine schrägliegende, zur Rohrachse konvexe (zum äußeren Umfang des ringförmigen Isoliermaterials 13 hin gekrümmte) Fläche aus. Dies ist die Folge der vom inneren Umfang (14) zum äußeren Umfang des Isoliermantels hin abnehmende Dehnungskräfte der von den Schrägen 5 und 6 gebildeten keilförmigen Randzonen des Plattenmaterials. Der Effekt vermindert die Materialspannungen im fertigen Klebebereich.

Ein besonderer Vorteil, der sich für ein Plattenmaterial gemäß der Erfindung ergibt, liegt darin, daß wegen der spitzen Winkel, welche die Schrägen 5 und 6 an ihren Endkanten ausbilden, Überlappungen der Längsränder beim Zusammenbiegen des Plattenmaterials zur Rohrummantelung auch dann zu einer recht glatten Oberfläche der Überlappungszone führt, wenn die Schrägen 5 und 6 nicht paßgenau aufeinanderliegen, das heißt, sich zu kurz oder zu weit überlappen. Demgegenüber verursacht eine nicht paßgenaue Überlappung bei Plattenmaterialien gemäß der DE 34 31 477 A1 eine eine Längsrille bzw. einen Längstwulst tragende Oberfläche.

In einer Weiterbildung weist das Plattenmaterial gemäß der Erfindung, sofern es in handhabbare, standardisierte Längen geschnitten ist, auch an den parallelogrammförmigen Frontseiten 3 und 4 je einen mit einer Schutzfolie abgedeckten Selbstklebestreifen auf (nicht gezeigt). Diese Klebeeinrichtungen dienen dann der Verbindung von aneinandergesetzten, Zug um Zug gefertigten Abschnitten der Isolierung.

An einen vorhandenen Isolierabschnitt wird ein Nachbarschnitt wie folgt angeordnet und mit ihm verbunden: Der vorhandene Abschnitt trägt an seiner vorderen Front noch seine mit Schutzfolie versehene Selbstklebefolie. So eng wie möglich, also bei Berührung des vorderen Klebestreifens des vorhandenen Abschnitts und des hinteren Klebestreifens des hinzutretenden des neuen Plattenmaterials wird der nächste Isolierabschnitt - wie zuvor beschrieben - gefertigt. Dann werden die sich berührenden Abdeckfolien ergriffen und entlang des Umfanges der Isolierung synchron aus dem Ringspalt gezogen. Ein zur Rohrachse konzentrisches Gegeneinanderpressen der elastischen, aneinander angrenzenden Isolierabschnitte vervollständigt und verfestigt die Klebeverbindung. Die Schutzfolie sollte über ein Ende des Plattenmaterials hinausragen, damit die Folie im angeordneten Zustand der Isolierung von deren Oberfläche wegragt und ergriffen werden kann.

Ferner ist ein nicht unerheblicher Vorteil der Erfindung darin zu finden, daß praktisch keine Materialabfälle auftreten. So können von Meterware Platten in beliebiger gewünschter Länge, und somit abfallfrei passend, geschnitten werden. Bei der Verwendung von vorgeschnittenen Platten standardisierter Länge wird allenfalls dann ein Verschnitt anfallen, wenn die letzte zu verwendende Platte gekürzt werden muß.

### Liste der Bezugszeichen

- 1: Oberseite (des Plattenmaterials gemäß der Erfindung)
- 2: Unterseite
- 3: Frontseite (parallelogrammförmig) vorne
- 4: Frontseite (parallelogrammförmig) hinten
- 5: Schräge (Schrägschnitt-Flächei
- 6: Schräge (Schrägschnitt-Fläche)
- 7: Selbstklebestreifen (zur Montageanordnung der Unterseite 2 am Rohr 14)
- 8: Selbstklebestreifen (für Klebeverbindung)
- 9: Selbst klebestreifen (für Klebeverbindung)
- 10: innenliegender Streifen der Schräge 6 (freiliegende Schnittfläche;
- 11: innenliegender Streifen der Schräge 5 (freiliegende Schnittfläche)
- 12: Klebenaht
- 13: Rohrisolierung
- 14: Rohr, Rohrleitung
- 15: Längsachse des Plattenmaterials
- 16 - 20: frei
- 21: konventionell geschlitzter Isolierschlauch, angeordnet
- 22: Klebenaht, senkrecht
- 23: Klebenaht, schräg
- 24: Selbstklebeband, angeordnet
- 25: Klebenaht, tangential

- A: Breite der Projektion der Schrägen 5 und 6 auf die Horizontale
- U: Länge des auf die Ebene abgerollten Umfangs U des Rohres 14

## Patentansprüche

1. Plattenmaterial für die thermische Isolierung von Rohren, das als bandartiges Gebilde aus Elastomerschaum mit konstanter Materialstärke gefertigt ist und dafür vorgesehen ist, um eine Rohrleitun^{g} (141 herumgelegt und durch Verklebung ihrer Längsränder miteinander an dem Rohr angeordnet zu werden, wobei
- die Breite des Plattenmaterials an den Umfang (U) des zu isolierenden Rohres (14) angepaßt ist,
- das Plattenmaterial senkrecht zu einer Längsachse (15) einen parallelogrammförmigen Querschnitt (3, 4) aufweist,
- die Projektionen der schrägen Flächen (5, 6) des Parallelogramms bzw. des Plattenmaterials auf die Horizontale jeweils die Breite A aufweist,
- die Breite des Plattenmaterials U + A mißt
- und wenigstens eine der beiden schrägen Flächen (5, 6) des Plattenmaterials mit einem Selbstklebestreifen mit Schutzfolie ausgerüstet ist,
**dadurch gekennzeichnet, daß**
- das Plattenmaterial in einem Stück gefertigt ist und
- die von jeder Schräge des Plattenmaterials gebildete Fläche (5, 6) einen Neigungswinkel zur Horizontalen zwischen 170° und 150° einnimmt.

2. Plattenmaterial nach Anspruch 1, **dadurch gekennzeichnet, daß** es in der Weise einstückig gefertigt ist, daß es aus einem Bandmaterial durch Schrägschnitt des Bandmaterials zur Parallelogrammform gefertigt ist.

3. Plattenmaterial nach Anspruch 1 oder 2, **gekennzeichnet durch** die Anordnung eines Selbstklebestreifens (7) mit Schutzfolie entlang des Längsrandes des ebenen Teils derjenigen Oberfläche des Plattenmaterials, die für die Anlage am Rohr (14) vorgesehen ist.

4. Plattenmaterial nach einem der Ansprüche 1 bis 3, **dadurch gekennzeichnet, daß** der Neigungswinkel der schrägen Flächen (5, 6) etwa 165° beträgt.

5. Plattenmaterial nach einem der Ansprüche 1 bis 4, **dadurch gekennzeichnet, daß** jede der schrägen Flächen (5, 6) an ihrem Längsrand mit einem Selbstklebestreifen (8, 9) ausgerüstet ist, dessen Breite die Hälfte der Breite der schrägen Flächen (5, 6) beträgt.

## Claims

1. Plate material for the thermal insulation of pipes, which is produced as a strip-like, elastomer foam structure having a consistent material thickness, and is provided to be fitted around a pipeline (14) and to be arranged on the pipe by joining together the longitudinal edges of said pipeline,
- the width of the plate material being adapted to the circumference (U) of the pipe (14) to be insulated,
- the plate material having a parallelogram-shaped cross-section (3, 4) perpendicular to a longitudinal axis (15),
- the projections of the oblique surfaces (5, 6) of the parallelogram or the plate material onto the horizontal each having a width A,
- the width of the plate material measuring U + A,
- and at least one of the two oblique surfaces (5, 6) of the plate material being equipped with a self-adhesive strip comprising a protective film,
**characterised in that**
- the plate material is produced in one piece and
- the surface (5, 6) formed by each incline of the plate material assumes an angle of inclination to the horizontal of between 170° and 150°.

2. Plate material according to claim 1, **characterised in that** it is produced in a single piece in such a way that it is made out of a strip material to form a parallelogram shape, by oblique cutting of the strip material.

3. Plate material according to either claim 1 or claim 2, **characterised by** the arrangement of a self-adhesive strip (7) comprising a protective film along the longitudinal edge of the plane part of the surface of the plate material that is provided to be placed against the pipe (14).

4. Plate material according to any one of claims 1 to 3, **characterised in that** the angle of inclination of the oblique surfaces (5, 6) is approximately 165°.

5. Plate material according to any one of claims 1 to 4, **characterised in that** each of the oblique surfaces (5, 6) is equipped on its longitudinal edge with a self-adhesive strip (8, 9), the width of which is half that of the oblique surfaces (5, 6).

## Revendications

1. Matériau en plaque pour l'isolation thermique de tuyaux, qui est produit sous forme d'une structure du type bande en mousse élastomère avec une épaisseur de matériau constante et est prévu pour être posé autour d'une conduite tubulaire (14) et être disposé sur le tuyau par collage de ses bords longitudinaux entre eux,
- la largeur du matériau en plaque étant adaptée à la circonférence (U) du tuyau (14) à isoler,
- le matériau en plaque présentant perpendiculairement à un axe longitudinal (15), une section (3, 4) en forme de parallélogramme,
- les projections des surfaces inclinées (5, 6) du parallélogramme ou du matériau en plaque sur l'horizontale, présentant respectivement la largeur A,
- la largeur du matériau en plaque mesurant U + A,
- et au moins l'une des deux surfaces inclinées (5, 6) du matériau en plaque étant munie d'une bande autocollante avec film protecteur,
**caractérisé en ce que**
- le matériau en plaque est fabriqué en une pièce, et
- la surface (5, 6) formée par chaque chanfrein du matériau en plaque présente un angle d'inclinaison par rapport à l'horizontale compris entre 170° et 150°.

2. Matériau en plaque selon la revendication 1, **caractérisé en ce qu'**il est fabriqué d'une seule pièce en ce sens qu'il est fabriqué à partir d'un matériau en bande par une coupe inclinée du matériau en bande lui conférant la forme de parallélogramme.

3. Matériau en plaque selon la revendication 1 ou 2, **caractérisé par** la disposition d'une bande autocollante (7) avec film protecteur le long du bord longitudinal de la partie plane de la surface du matériau en plaque qui est prévue pour être appliquée sur le tuyau (14).

4. Matériau en plaque selon l'une des revendications 1 à 3, **caractérisé en ce que** l'angle d'inclinaison des surfaces inclinées (5, 6) est d'environ 165°.

5. Matériau en plaque selon l'une des revendications 1 à 4, **caractérisé en ce que** chacune des surfaces inclinées (5, 6) est munie sur son bord longitudinal, d'une bande autocollante (8, 9), dont la largeur est égale à la moitié de la largeur des surfaces inclinées (5, 6).
